Europäisches Patentamt

European Patent Office

Office européen des brevets

(11) Publication number: **0 205 704**
A2

# (12) EUROPEAN PATENT APPLICATION

(21) Application number: 85307516.6

(22) Date of filing: 17.10.85

(51) Int. Cl.⁴: **C 04 B 35/00,** B 28 B 1/52, B 28 B 3/12

(30) Priority: 18.06.85 JP 132567/85

(43) Date of publication of application: 30.12.86 Bulletin 86/52

(84) Designated Contracting States: DE FR GB

(71) Applicant: **ISOLITE BABCOCK REFRACTORIES COMPANY LIMITED, 7, Aza Mukaiyama Ohaza Hagi Otowa-Cho, Hori-Gun Aichi Prefecture (JP)**

(72) Inventor: **Hayashi, Masayuki, 6-37, Minami-Ohdohri, Toyokawa City Aichi Prefecture (JP)**
Inventor: **Aoki, Kenji, 53-3, 2-chome, Chubu-cho, Toyokawa City Aichi Prefecture (JP)**

(74) Representative: **Hartley, David et al, c/o Withers & Rogers 4 Dyer's Buildings Holborn, London, EC1N 2JT (GB)**

(54) Method of treating a blanket of ceramic fibres.

(57) A method of treating a blanket of ceramic fibers containing 40 to 65% by weight of alumina and 35 to 60% by weight of silica, which occupy a total of at least 95% by weight, while the balance is other metal oxides, heat treated at a temperature of 950 °C to 1100 °C, whereby fine crystals are formed in the fibers, and having a thickness of 6 to 50 mm. The blanket is compressed between a pair of presses having therebetween a clearance which is equal to 40 to 80% of the blanket thickness, while it is passed through the roll clearance at a speed of not more than 500 cm per minute.

METHOD OF TREATING A BLANKET OF
CERAMIC FIBERS

BACKGROUND OF THE INVENTION

1. Field of the Invention:

·This invention relates to a method of improving the flexibility of a blanket of ceramic fibers consisting mainly of alumina and silica in which fine crystals are formed.

2. Description of the Prior Art:

There is known a refractory or heat insulating blanket of ceramic fibers containing 40 to 65% by weight of alumina ($Al_2O_3$) and 35 to 60% by weight of silica ($SiO_2$), which occupy a total of at least 95% by weight, while the balance is other metal oxides. This blanket is amorphous, as it is a mat of fibers prepared by melting the raw materials and fiberizing the molten mixture by air or steam or by spinning to cool it rapidly. Therefore, it has the characteristic of undergoing devitrification and crystallization, resulting in shrinkage, when subjected to a high temperature.

An amorphous blanket of ceramic fibers which does not shrink very much at a high temperature is disclosed in, for example, Japanese Laid-Open Patent Specification No. 2714/1976 published on January 10, 1976 or Japanese Laid-Open Patent Specification No.22092/1980 published on February 16, 1980, and commerically available. It is featured by being composed of fine crystals formed by heating at a temperature of 950°C to 1240°C. This heat treatment, however, makes the blanket stiff. If the blanket, which is usually an elongate mat, is wound about a core tube for the purpose of transportation, its inner surface facing the core gets wrinkled and may be observed on its outer surface cracks. These wrinkles and cracks deprive the blanket of its commercial value. It is, therefore, not practical to wind it into a roll of small diameter which is convenient for its transportation, or application to a large structure. The same problems are also unavoidable when the blanket is applied to the curved surface of a pipe or the corner of a wall.

### SUMMARY OF THE INVENTION

It is, therefore, an object of this invention to provide a method of treating a blanket of ceramic fibers to improve its flexibility so that it may not crack or break, even if it is bent at right angles about a radius of curvature of, say, 20 mm.

This invention is directed to a method of treating a blanket of ceramic fibers containing 40 to 65% by weight of alumina and 35 to 60% by weight of silica which occupy a total of at least 95% by weight, the balance being other metal oxides, characterized by heat-treating the blanket at a temperature of 950°C to 1100°C to form fine crystals in the ceramic fibers and have a thickness of 6 to 50 mm and passing the blanket through a pressing means to compress the thickness of the blanket to be equal to 40 to 80% of its original thickness.

This invention improves the flexibility of a blanket of ceramic fibers consisting mainly of alumina and silica which has been stiffened as a result of the formation of fine crystals by heat treatment at a temperature of at least 950°C. The blanket treated by the method of this invention is easy to handle for transportation or application.

The term "blanket" as herein used includes a blanket formed by compacting ceramic fibers put together in the shape of a sheet or web, a mat formed by subjecting such fibers to needle punching, and a felt prepared by a dry method.

The composition of ceramic fibers as hereinabove set forth is merely illustrative of the commercially available products and not intended to constitute a part of this invention.

BRIEF DESCRIPTION OF THE DRAWINGS

Fig. 1 is a schematic view showing an embodiment of a pressing means according to the invention.

Figs. 2 and 3 are respectively a schematic view showing another embodiment of the pressing means of the invention.

DETAILED DESCRIPTION OF THE INVENTION

This invention is applicable to a blanket of ceramic

fibers which has been heat treated at a temperature ranging from 950°C to 1100°C, for the reasons which will now be set forth. The temperature of 950°C is approximately the minimum temperature at which fine crystals are formed. The fine crystals which are formed at a temperature exceeding 1100°C are so large that the fibers become very brittle and lose flexibility when compressed by the rolls.

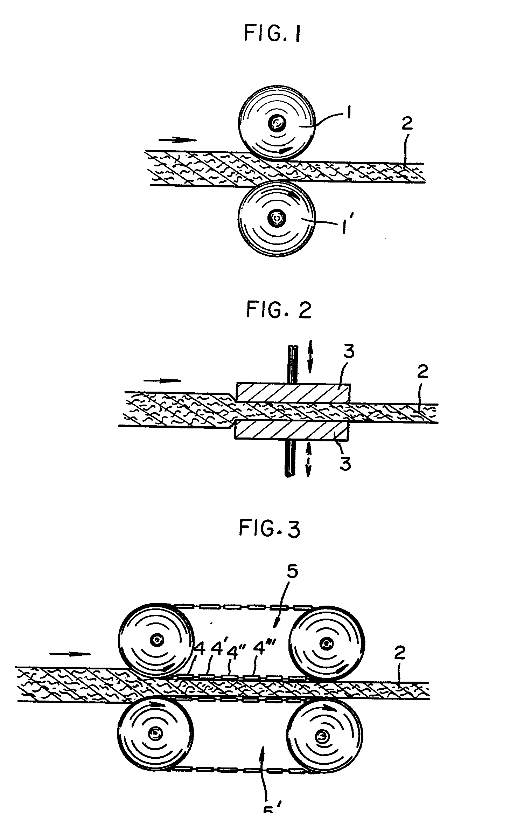

The rolls 1, 1' which are employed by the method of this invention have therebetween a clearance which is equal to 40 to 80% of the thickness of the blanket 2. In other words, the blanket 2 is compressed by the rolls 1, 1' to a thickness which is equal to 40 to 80% of its original thickness as shown in Fig. 1. If it is only compressed to a thickness exceeding 80% of its original thickness, a part of the blanket remains stiff and cracks when it is bent. If it is compressed to a thickness less than 40% of its original thickness, the majority of the interlaced fibers in the blanket are broken and its tensile strength is, therefore, greatly reduced, resulting in breakage during handling or after application.

The blanket is passed through the clearance between the rolls at a speed of not more than 500 cm per minute. A speed exceeding 500 cm per minute is so fast that the blanket is undesirably stretched. On the other hand, a speed not slower than 4 cm per minute is preferably adopted from the standpoint of industrial economy.

The blanket may be compressed by the rolls when it is still hot upon leaving a continuous heat treatment furnace, or after it has been cooled to ambient temperature.

The method of this invention is applicable to any commercially available blanket having a thickness of 6 to 50 mm after it has been heat treated. If its thickness is smaller than 6 mm, it is unable to retain its shape when ·compressed. If its thickness exceeds 50 mm, there is no assurance as to the production of any blanket that will not crack when bent about a radius of curvature of, say, 30 mm.

The rolls may be either metallic or ceramic rolls. Although it is preferable to use straight cylindrical rolls having a diameter of, say, 8 to 25 cm, the rolls and their diameter depend upon the thickness of the blanket to be treated, the desired rate of its reduction in thickness and the speed at which it is treated.

According to this invention any pressing means other than the roll-type pressing means which can treat the blanket at a desired blanket speed to obtain a desired reduction ratio of its thickness may be employed, for example, a common panel-type pressing means composed of a pair of panels oppositely arranged (as indicated by 3, 3' in Fig. 2) and having a predetermined clearance therebetween wherein either one of the panels or both of them are moved relatively to each other to reduce the thickness of the blanket, or a caterpillar-type pressing means composed of a pair of belts oppositely arranged and having a predetermined clearance therebetween, each of the belts of which formed by connecting successively small-sized plates to one another (as indicated by 4, 4', 4", ------- in Fig. 3).

The invention will now be described with reference to a plurality of examples thereof.

### EXAMPLE 1

A mat of ceramic fibers containing 46% by weight of $Al_2O_3$, 53% by weight of $SiO_2$, and other metal oxides, to which a lubricant had been applied, was subjected to needle punching, and heated to about 500°C, while being compressed by rolls, in a heating furnace located immediately after the needle punching device, whereby a blanket from which the lubricant had been removed was prepared. The blanket was heat treated for 12 to 13 minutes in a tunnel furnace heated to 980° C. The blanket had a thickness of about 30 mm at the exit of the tunnel furnace. The blanket was compressed between a pair of rotating metallic rolls of 10 cm in diameter located adjacent to the exit of the tunnel furnace and having a clearance of 20 mm therebetween, while being passed therethrough at a speed of 20 cm per minute. The blanket as rolled had a thickness of about 25 mm and a bulk density of 0.128 g/cc.

The blanket was cut to a width of 60 cm and a length of 7.2 m and wound about a core tube having an outside diameter of 38 mm and a length of 70 cm. It was unwound from the tube and rewound thereon. The blanket did not show any crack or other defect on its surface.

<div align="center">EXAMPLE 2</div>

The procedure of EXAMPLE 1 was repeated for preparing a blanket from ceramic fibers containing 49% by weight of $Al_2O_3$, 50% by weight of $SiO_2$, and other metal oxides. It was heat treated for about seven minutes in a tunnel furnace heated to 1100°C. It had a thickness of about 30 mm at the exit of the tunnel furnace. The blanket was compressed between a pair of rotating metallic rolls of 12.5 cm in diameter located adjacent to the exit of the tunnel furnace and having a clearance of 23 mm therebetween, while being passed therethrough at a speed of 50 cm per minute. The blanket as rolled had a thickness of about 25 mm and a bulk density of 0.104 g/cc.

The blanket was cut to a width of 60 cm and a length of 7.2 m and wound about a core tube having an outside diameter of 38 mm and a length of 70 cm. It was unwound from the tube and rewound thereon. The blanket did not show any crack or other defect on its surface.

<div align="center">EXAMPLES 3 TO 10</div>

The procedure of EXAMPLE 1 was repeated by varying the thickness of the blanket as heat treated, the speed at which the blanket was passed between the rolls, the ratio of reduction in blanket thickness (ratio in thickness of the blanket as rolled to the blanket as heat treated), and the diameter of the rolls.  The results are shown below.

Table 1

| Example | 3 | 4 | 5 | 6 | 7 | 8 | 9 | 10 |
|---|---|---|---|---|---|---|---|---|
| Thickness of blanket as heat treated, mm | 6 | 6 | 6 | 25 | 25 | 25 | 50 | 50 |
| Blanket speed, cm/min. | 550 | 450 | 100 | 100 | 30 | 10 | 30 | 4 |
| Reduction ratio, % | 80 | 80 | 40 | 60 | 40 | 20 | 60 | 40 |
| Roll dia., cm | 8 | 8 | 10 | 25 | 25 | 25 | 25 | 25 |
| Results | Bad | Good | Good | Good | Good | Bad | Good | Good |

In EXAMPLE 3, in which the blanket speed was too fast, the blanket was undesirably stretched and also cracked. In EXAMPLE 8, in which the reduction ratio was too large, the blanket showed significant reduction in tensile strength.

EXAMPLES 11 TO 17

A mat of ceramic fibers having the same composition as of EXAMPLE 1 was prepared under the same conditions as of EXAMPLE 1.  The resultant mat was treated under the same conditions as of EXAMPLE 1 except application of a panel type press shown in Fig. 2 as the pressing means.  The results are shown below.

9

Table 2

| Example | 11 | 12 | 13 | 14 | 15 | 16 | 17 |
|---|---|---|---|---|---|---|---|
| Thickness of blanket as heat treated, mm | 6 | 6 | 25 | 25 | 25 | 50 | 50 |
| Pressing time, sec. | 5 | 5 | 5 | 60 | 60 | 5 | 60 |
| Reduction ratio % | 80 | 40 | 60 | 40 | 80 | 60 | 40 |
| Results | Good | Good | Good | Good | Good | Good | Good |

The blanket according to all of the other EXAMPLES were sufficiently flexible to resist cracking even if they were bent.

-10-

**CLAIMS**

1. A method of treating a blanket of ceramic fibres containing 40 to 65% by weight of alumina and 35 to 60% by weight of silica, the alumina and the silica occupying a total of at least 95% by weight, the balance being other metal oxides, the method comprising heat-treating the blanket at a temperature of 950°C to 1100°C, so as to form fine crystals in the fibres, and to have a thickness of 6 to 50 mm, and passing the blanket through a pressing means to compress the thickness of the blanket to 40 to 80% of its original thickness.

2. A method according to claim 1, wherein the blanket is compressed while it is still hot immediately after the heat treatment.

3. A method according to claim 1 or claim 2, wherein the blanket passes through the pressing means at a speed not exceeding 500 cm per minute.

4. A method according to claim 3, wherein the speed of the blanket passing through the pressing means is 4 to 500 cm per minute.

5. A method according to claim 1 or 2, wherein the pressing means is a pair of rolls having a diameter of 8 to 25 cm.

6. A method according to claim 1 or claim 2, wherein the pressing means is a pair of ceramic rolls having a diameter of 8 to 25 cm.

7. A method according to claim 1 or claim 2, wherein the

-11-

pressing means is a pair of panels.

8. A method according to claim 1 or claim 2, wherien the pressing means is a pair of caterpillars.

FIG. 1

FIG. 2

FIG. 3